# EUROPEAN PATENT APPLICATION

(11) **EP 4 333 104 A1**
(43) Date of publication of application: **06.03.2024**
(21) Application number: 22858729.1
(22) Date of filing: 17.08.2022
(51) Int. Cl.: H01M 4/131, H01M 4/136, H01M 4/62, H01M 10/0562, H01M 10/052, H01M 4/139, H01M 4/38, H01M 4/40

(54) **CATHODE FOR ALL-SOLID-STATE BATTERY, AND ALL-SOLID-STATE BATTERY COMPRISING SAME**

(30) Priority: 17.08.2021 KR 20210107946
(71) Applicant: LG ENERGY SOLUTION, LTD., Seoul 07335 (KR); IUCF-HYU (INDUSTRY-UNIVERSITY COOPERATION FOUNDATION HANYANG UNIVERSITY), Seoul 04763 (KR)
(72) Inventor: LEE, Daejin, Daejeon 34122 (KR); HAH, Hoejin, Daejeon 34122 (KR); HONG, Seung Bo, Seoul 01747 (KR); LEE, Si Eun, Seoul 04764 (KR); LEE, Young Jun, Seoul 04764 (KR); KIM, Dong Won, Seoul 06219 (KR)
(74) Representative: Goddar, Heinz J.
(86) International application number: PCT/KR2022/012237
(87) International publication number: WO 2023/022492

(57) **Abstract**

The present invention relates to a positive electrode for an all-solid-state battery, comprising: a positive electrode active material; a perfluorinated ionomer comprising lithium substituted sulfonate; a solid electrolyte; and conductive carbon, and an all-solid-state battery comprising the same.

## Description

### [Technical Field]

This application claims the benefit of priority based on Korean Patent Application No. 10-2021-0107946 filed on August 17, 2021, all contents of which are incorporated herein by reference.

The present invention relates to a positive electrode for an all-solid-state battery and an all-solid-state battery comprising the same, and more specifically, to a positive electrode for an all-solid-state battery with a simplified process and improved electrochemical characteristics and cycle characteristics, and an all-solid-state battery comprising the same.

### [Background Art]

With the development of portable mobile electronic devices such as smart phones, MP3 players, and tablet PCs, the demand for secondary batteries capable of storing electrical energy is increasing explosively. In particular, with the advent of electric vehicles, medium- and large-sized energy storage systems, and portable devices requiring high energy density, the demand for lithium secondary batteries is increasing. With such an increase in demand for lithium secondary batteries, various research and development for improving the characteristics of positive electrodes used in lithium secondary batteries are being conducted.

On the other hand, the conventional lithium secondary battery uses a liquid non-aqueous organic electrolyte, and thus has a risk of ignition and explosion. In fact, since explosion accidents of products to which it is applied are continuously occurring, it is urgent to solve these problems.

An all-solid-state battery is a battery in which these organic electrolytes are replaced with solid electrolytes, and thus all the battery components such as electrodes and electrolytes are made of solid, wherein due to the high safety of the accommodated solid electrolyte itself, it is possible to fundamentally solve the risk of ignition and explosion. However, there is a problem that since most solid electrolytes have lower ion conductivity than liquid electrolytes, the capacity of the battery is low when applied in practice, and the cycle characteristics at room temperature are lower than those of liquid electrolytes.

That is, the safety of the battery can be secured by using the solid electrolyte, but the cycle characteristics are deteriorated and thus become problematic. Therefore, in order to solve these problems, various studies are being conducted.

### [Prior Art Document]

### [Patent Document]

US Patent No. 5,523,179

### [Disclosure]

### [Technical Problem]

One technical problem to be solved by the present application is to provide a positive electrode for an all-solid-state battery with improved productivity by manufacturing a positive electrode without using a solvent and thus simplifying the process, and an all-solid-state battery comprising the same.

Another technical problem to be solved by the present application is to provide a positive electrode for an all-solid-state battery with improved electrochemical characteristics and cycle characteristics, by using a novel binder to have excellent binding properties between the positive electrode active materials, and an all-solid-state battery comprising the same.

The technical problem to be solved by the present application is not limited to those described above.

### [Technical Solution]

In order to solve the above technical problems, the present invention provides a positive electrode for an all-solid-state battery and an all-solid-state battery comprising the same.

In one embodiment, the present invention comprises a positive electrode for an all-solid-state battery comprising a positive electrode active material; a perfluorinated ionomer comprising lithium substituted sulfonate; a solid electrolyte; and a conductive carbon.

In one embodiment, the perfluorinated ionomer may be represented by the following Formula 1. 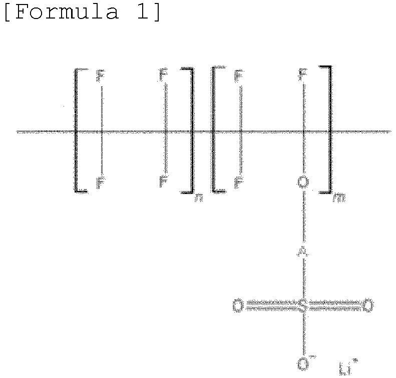 wherein A is each independently a substituted or unsubstituted C1 to C30 alkylene group, a substituted or unsubstituted C1 to C30 haloalkylene group or a substituted or unsubstituted C1 to C30 hydroxyalkylene group, and n and m are each an integer from 1 to 100.

In one embodiment, in Formula 1, A is -(CF₂-CF₂)ₚ-, and p may be an integer of 1 to 15.

In one embodiment, the positive electrode according to the present invention can be manufactured by mixing the positive electrode active material; the perfluorinated ionomer containing lithium substituted sulfonate; a solid electrolyte; and conductive carbon, without using a solvent.

In one embodiment, the positive electrode active material may comprise at least one of LiCoO₂, Li(NiₓCo_{y}Mn_{z})O₂ [x + y + z = 1], Li(NiₓCo_{y}Al_{z})O₂ [x + y + z = 1], and LiFePO₄.

In one embodiment, the solid electrolyte may comprise a halide-based solid electrolyte or a sulfide-based solid electrolyte.

In one embodiment, the sulfide-based solid electrolyte may comprise at least one of Li₆PS₅Cl, Li₁₀GeP₂S₁₂, Li₃PS₄, and Li₇P₃S₁₁, and the halide-based solid electrolyte may comprise at least one of Li₃YCl₆, Li₃InCl₆, and Li₂ZrCl₆.

In one embodiment, the conductive carbon may comprise at least one of vapor grown carbon fiber (VGCF), carbon nanotube (CNT), Super P, Super C, carbon black, Ketjen black, acetylene black, coke, glassy carbon, and activated carbon.

In one embodiment, the positive electrode may comprise 60% by weight to 95% by weight of the positive electrode active material, 5% by weight to 40% by weight of the solid electrolyte, 0.1% by weight to 10% by weight of the conductive carbon, and 0.1% by weight to 10% by weight of the perfluorinated ionomer.

In one embodiment, the perfluorinated ionomer is a copolymer containing polytetrafluoroethylene, and the perfluorinated ionomer may be comprised in an amount of 0.1% by weight to 5% by weight.

According to another aspect of the present invention, the embodiment of the present invention comprises an all-solid-state battery comprising a positive electrode for an all-solid-state battery; a negative electrode; and a solid electrolyte layer interposed between the positive electrode and the negative electrode.

In one embodiment, the solid electrolyte layer may be made of the same material as the solid electrolyte contained in the positive electrode for the all-solid-state battery.

In one embodiment, the solid electrolyte and the solid electrolyte layer may comprise at least one of Li₆PS₅Cl, Li₁₀GeP₂S₁₂, Li₃PS₄, and Li₇P₃S₁₁.

In one embodiment, the negative electrode may comprise at least one of lithium metal and indium-lithium alloy.

### [Advantageous Effects]

According to the present invention as described above, it is possible to obtain a positive electrode for an all-solid-state battery with high bonding strength between the positive electrode active materials without using a solvent by using a novel perfluorinated ionomer in manufacturing the positive electrode in the present invention, and an all-solid-state battery comprising the same.

In addition, the positive electrode for then all-solid-state battery according to the present invention and the all-solid-state battery comprising the same are provided to have ion conductivity similar to that of the liquid electrolyte in spite of using a solid electrolyte, and thus the capacity and cycle characteristics of the battery can be improved.

### [Description of Drawings]

FIG. 1 is a view schematically showing the method of manufacturing the positive electrode for the all-solid-state battery by a solvent-free process using the positive electrode active material, the solid electrolyte, the conductive carbon and the binder according to Examples of the present invention and Comparative Examples.
FIG. 2 is a structural formula showing the binder comprised in Examples of the present invention and Comparative Examples.
FIG. 3 is a schematic diagram of the all-solid-state battery manufactured using the composite positive electrode according to Examples of the present invention and Comparative Examples.
FIG. 4 is a graph comparing charge/discharge curves in each cycle according to Comparative Example 1(a), Comparative Example 2(b) and Example 1(c) of the present invention.
FIG. 5 is a graph showing cycle characteristics and efficiency according to Comparative Example 1(a), Comparative Example 2(b) and Example 1(c) of the present invention.
FIG. 6 is a graph showing c-rate characteristics of Comparative Example 1, Comparative Example 2, and Example 1 of the present invention.
FIG. 7 is a result showing the cycle characteristics of Example 1(a), Example 2(b) and Example 3(c) of the present invention.
FIG. 8 is a result showing the cycle characteristics of Example 1(a), Example 4(b), Example 5(c) and Example 6(d) of the present invention.

### [Best Mode]

Hereinafter, preferred embodiments of the present invention will be described in detail with reference to the accompanying drawings. However, the technical spirit of the present invention is not limited to the embodiments described herein and may be embodied in other forms. Rather, the embodiments introduced herein are provided so that this disclosure will be thorough and complete, and that the spirit of the present invention may be sufficiently conveyed to those skilled in the art.

In this specification, when a component is referred to as being on another component, that means it may be formed directly on other components or a third component may be interposed therebetween. In addition, in the drawings, the thicknesses of the films and regions are exaggerated for effective explanation of technical content.

In addition, in various embodiments of the present specification, terms such as first, second, third, etc. are used to describe various components, but these components should not be limited by these terms. These terms are only used to distinguish one component from another. Accordingly, what is referred to as a first component in one embodiment may be referred to as a second component in another embodiment. Each embodiment described and illustrated herein also comprises a complementary embodiment thereof. Also, in this specification, the term 'and/or' is used in the sense of including at least one of the elements listed before and after it.

In the specification, the singular forms "a," "an," and "the" comprise plural referents unless the context clearly dictates otherwise. It is to be understood that the terms such as "comprise" or "have" as used in the present specification, are intended to designate the presence of stated features, numbers, steps, components, or combinations thereof, but not to preclude the possibility of the presence or addition of one or more other features, numbers, steps, components, or combinations thereof.

In addition, when it is determined that a detailed description of a related well-known function or configuration in describing the present invention may unnecessarily obscure the gist of the present invention, the detailed description thereof will be omitted.

In addition, in the present application, "mol%" is interpreted as indicating the content of any metal included in the positive electrode active material or the precursor of the positive electrode active material, when the sum of the metals other than sodium and oxygen in the positive electrode active material or the precursor of the positive electrode active material is assumed to be 100%.

One embodiment of the present invention may comprise a positive electrode for an all-solid-state battery comprising a positive electrode active material; a perfluorinated ionomer comprising lithium substituted sulfonate; a solid electrolyte; and a conductive carbon.

The positive electrode for the all-solid-state battery can be manufactured by physically mixing the positive electrode active material, the perfluorinated ionomer, the solid electrolyte and the conductive carbon without using a solvent, and the positive electrode active material, the solid electrolyte and the conductive carbon may be bound to each other in a uniformly mixed state by the perfluorinated ionomer.

In general, the positive electrode for the all-solid-state battery is manufactured as a positive electrode by using a solvent to uniformly mix solid powders such as the positive electrode active material, the binder, the solid electrolyte, and the conductive carbon, and dispersing them in the solvent to form a slurry. On the other hand, as such, in the casting method using a solvent, when a positive electrode is prepared, there is a problem that the solvent reacts with the solid electrolyte, such as the sulfide-based solid electrolyte, to destroy the crystallinity of the solid electrolyte, thereby reducing the ion conductivity. In addition, when a solvent is used, there is a limitation in the selection of the type of binder that only the polymer binder that can be dissolved in the solvent should be used.

On the other hand, the perfluorinated ionomer according to the present embodiment is a kind of novel polymer binder, and since the perfluorinated ionomer has flexible properties in the process of dry mixing without using a solvent, it can be easily mixed with the positive electrode active material, the solid electrolyte, and the conductive carbon to bind them to each other. In addition, since the perfluorinated ionomer contains lithium substituted sulfonate, conductivity to lithium ions may be further improved, thereby exhibiting high capacity.

The positive electrode for the all-solid-state battery repeatedly contracts and expands by charging/discharging lithium ions, but the perfluorinated ionomer according to present embodiment has flexible characteristics, and thus, even when contraction and expansion are repeated, since the contact between the positive electrode active materials bound to each other by the perfluorinated ionomer is easily maintained, lifetime characteristics can be improved.

Specifically, the perfluorinated ionomer may be represented by Formula 1 below. 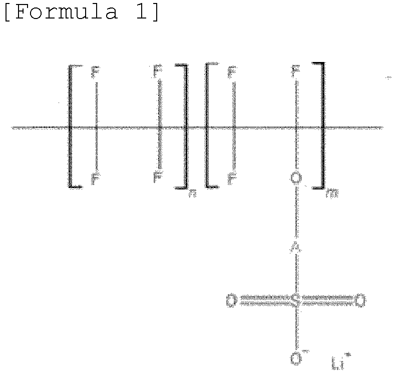 wherein A is each independently a substituted or unsubstituted C1 to C30 alkylene group, a substituted or unsubstituted C1 to C30 haloalkylene group or a substituted or unsubstituted C1 to C30 hydroxyalkylene group, and n and m are each an integer from 1 to 100. For example, the perfluorinated ionomer of Formula 1 may be a random copolymer.

More specifically, in Formula 1, A is -(CF₂-CF₂)ₚ-, and p may include an integer of 1 to 15.

For example, the perfluorinated ionomer is a polytetrafluoroethylene-based copolymer represented by the following Formula 2, and may contain lithium ions, and specifically, may be poly(tetrafluoroethylene-co-perfluoro(3-oxa-4-pentenesulfonicacid)) lithium salt. 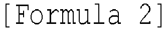 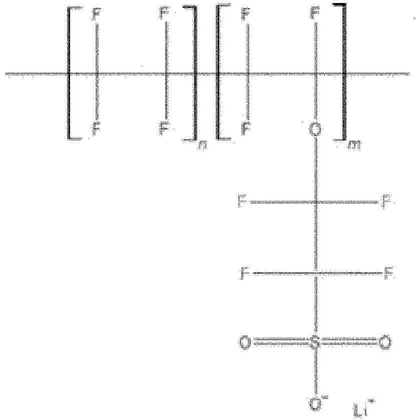 wherein n is an integer from 1 to 100, m may be an integer from 1 to 20, and specifically, n may be an integer 5 times the number of m. More specifically, it may be a random copolymer in which n is 5 and m is 1.

The positive electrode active material may be manufactured by firing a composite metal hydroxide including at least one of nickel (Ni), cobalt (Co), manganese (Mn), and aluminum (Al) with a lithium compound. For example, the positive electrode active material may have a layered structure, and include a high content of nickel of 50% or more, and may exhibit a high capacity.

The positive electrode active material may comprise at least one of LiCoO₂, Li(NiₓCo_{y}Mn_{z})O₂ [x + y + z = 1], Li(NiₓCo_{y}Al_{z})O₂ [x + y + z = 1], and LiFePO₄.

The positive electrode for the all-solid-state battery according to this embodiment may contain a solid electrolyte, wherein the solid electrolyte may comprise a halide-based solid electrolyte or a sulfide-based solid electrolyte. For example, the sulfide-based solid electrolyte may comprise at least one of Li₆PS₅Cl, Li₁₀GeP₂S₁₂, Li₃PS₄, and Li₇P₃S₁₁. In addition, the halide-based solid electrolyte may comprise at least one of Li₃YCl₆, Li₃InCl₆, and Li₂ZrCl₆.

The solid electrolyte can be mixed with the positive electrode active material to further improve the mobility of ions. Specifically, the solid electrolyte may be a sulfide-based solid electrolyte.

The conductive carbon may comprise at least one of vapor grown carbon fiber (VGCF), carbon nanotube (CNT), Super P, Super C, carbon black, Ketjen black, acetylene black, coke, glassy carbon, and activated carbon.

In one embodiment of the present invention, the positive electrode may comprise 60% by weight to 95% by weight of the positive electrode active material, 5% by weight to 40% by weight of the solid electrolyte, 0.1% by weight to 10% by weight of the conductive carbon, and 0.1% by weight to 10% by weight of the perfluorinated ionomer.

Specifically, the perfluorinated ionomer is a copolymer containing polytetrafluoroethylene, and the perfluorinated ionomer may be contained in an amount of 0.1% by weight to 5% by weight. More specifically, the perfluorinated ionomer may be contained in an amount of 0.1 % by weight or more, 0.2 % by weight or more, 0.3 % by weight or more, 0.4 % by weight or more, 0.5 % by weight or more, 0.6 % by weight or more, 0.7 % by weight or more, 0.8 % by weight or more, 0.9 % by weight or more, or 1.0 % by weight or more, and 5.0 % by weight or less, 4.9 % by weight or less, 4.8 % by weight or less, 4.7 % by weight or less, 4.6 % by weight or less, 4.5 % by weight or less, 4.4 % by weight or less, 4.3 % by weight or less, 4.2 % by weight or less, 4.1 % by weight or less, 4.0 % by weight or less, 3.9 % by weight or less, 3.8 % by weight or less, 3.7 % by weight or less, 3.6 % by weight or less, 3.5 % by weight or less, 3.4 % by weight or less, 3.3 % by weight or less, 3.2 % by weight or less, 3.1 % by weight or less, or 3.0 % by weight or less. If the content of the perfluorinated ionomer is less than 0.1% by weight, the amount contained is too small, and thus there is a problem that the positive electrode active material cannot be sufficiently bound. If the content of the perfluorinated ionomer exceeds 5% by weight, the electron and ion conduction properties in the positive electrode may be deteriorated, or the content of the positive electrode active material may be unnecessarily reduced, thereby reducing the capacity.

According to another aspect of the present invention, an embodiment of the present invention comprises an all-solid-state battery comprising the positive electrode for the all-solid-state battery described above; a negative electrode; and a solid electrolyte layer interposed between the positive electrode and the negative electrode.

The solid electrolyte layer may be made of the same material as the solid electrolyte contained in the positive electrode for the all-solid-state battery. Since the solid electrolyte contained in the positive electrode for the all-solid-state battery and the solid electrolyte layer are made of the same material, the mobility of lithium ions may be improved, the overall structure of the all-solid-state battery may be stabilized, and the production efficiency may be improved.

The solid electrolyte and the solid electrolyte layer may be a sulfide-based solid electrolyte comprising at least one of Li₆PS₅Cl, Li₁₀GeP₂S₁₂, Li₃PS₄, and Li₇P₃S₁₁.

Since the positive electrode for the all-solid-state battery according to this embodiment is manufactured in a solvent-free manner by the perfluorinated ionomer without using a solvent, it is possible to prevent the solvent remaining in the positive electrode for the all-solid-state battery from reacting with the sulfide-based solid electrolyte to decrease the crystallinity of the solid electrolyte. The negative electrode may be formed of at least one of lithium metal and indium-lithium alloy.

Hereinafter, Examples of the present invention and Comparative Examples will be described. However, the following Examples are only preferred examples of the present invention, and the scope of the present invention is not limited by the following examples.

### 1. Manufacture of positive electrode of all-solid-state battery

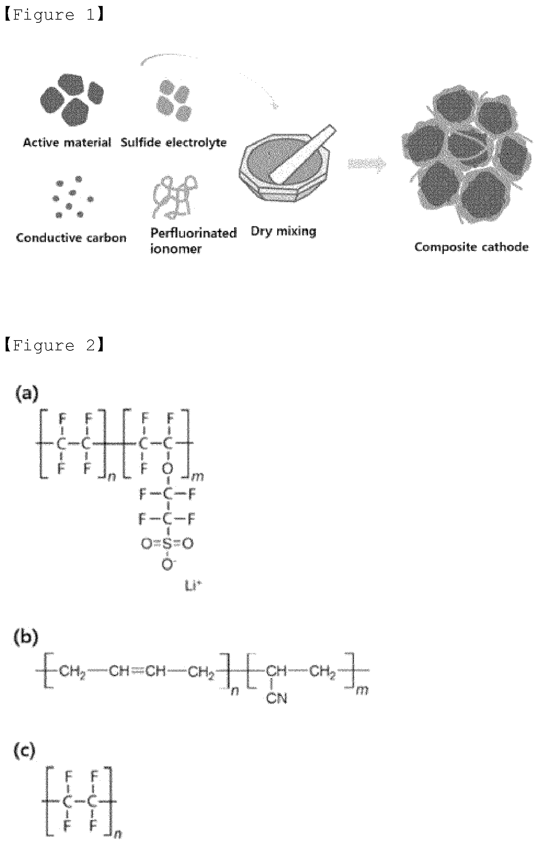

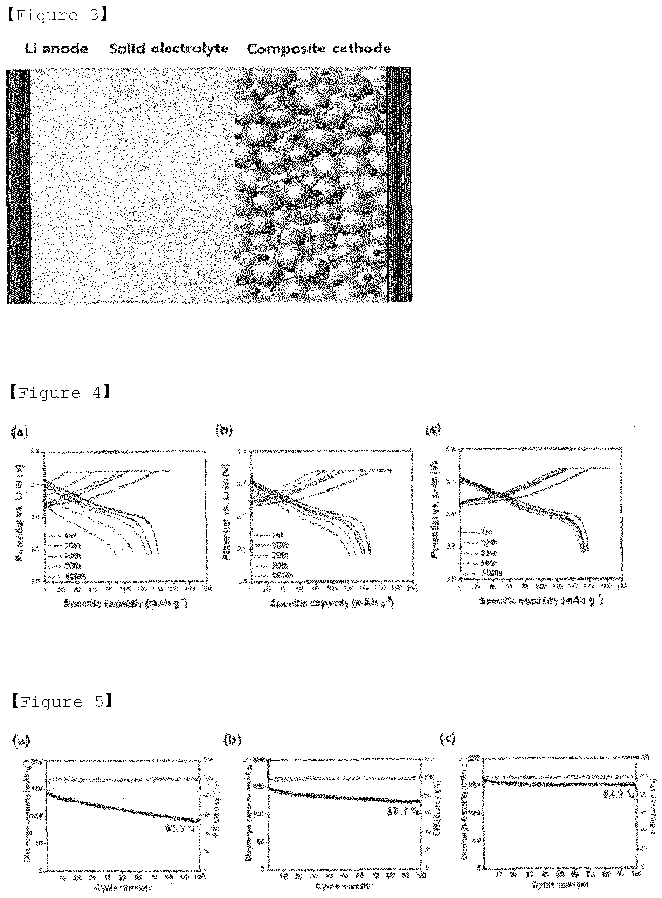

FIG. 1 is a diagram schematically illustrating a method of manufacturing a positive electrode for an all-solid-state battery in a solvent-free process using a positive electrode active material, a solid electrolyte, conductive carbon, and a binder according to Examples of the present invention and Comparative Examples. FIG. 2 is a structural formula showing the binder comprised in Examples of the present invention and Comparative Examples. In FIG. 2, (a) is a polytetrafluoroethylene-based copolymer ionomer binder according to Examples 1 to 6 (wherein, n = 5, m = 1), (b) is a nitrile butadiene rubber binder according to Comparative Example 1 (where n = 3, m = 1), and (c) is a polytetrafluoroethylene binder according to Comparative Example 2. FIG. 3 is a schematic diagram of an all-solid-state battery manufactured using a composite positive electrode according to Examples of the present invention and Comparative Examples.

### Example 1

A positive electrode active material, LiNi_{0.7}Co_{0.15}Mn_{0.15}O₂ (hereinafter referred to as NCM) having a nickel content of 70%, a cobalt content of 15%, and a manganese content of 15% were mixed with Li₆PS₅Cl, which is a sulfide-based solid electrolyte, at room temperature. Next, a conductive material (VGCF, Sigma Aldrich company) and a polytetrafluoroethylene-based copolymer ionomer binder (see (a) of FIG. 2) were added to the mixture of positive electrode active material and solid electrolyte, followed by dry mixing for 10 minutes to prepare a composite positive electrode. The positive electrode active material, the sulfide-based solid electrolyte, the conductive material and the binder were mixed in a weight ratio as shown in Table 1 below. After pressurizing the prepared composite positive electrode at a pressure of 430 Mpa, a negative electrode current collector (copper) as a negative electrode, lithium-indium alloy (Lithium: Honjo company, Indium: Nilaco company), solid electrolyte layer of Li₆PS₅Cl (100mg), a composite positive electrode, and a positive electrode current collector (aluminum) were sequentially stacked to manufacture an all-solid-state battery, as shown in FIG. 3. Here, the loading level of the composite positive electrode is shown in Table 1 below.

### Example 2

A composite positive electrode was manufactured in the same manner as in Example 1, but the loading level of the composite positive electrode was manufactured to be lower than Example 1 as shown in Table 1 below when manufacturing an all-solid-state battery.

### Example 3

A composite positive electrode was manufactured in the same manner as in Example 1, but the loading level of the composite positive electrode was manufactured to be higher than Example 1 as shown in Table 1 below when manufacturing an all-solid-state battery.

### Example 4

A composite positive electrode was manufactured in the same manner as in Example 1, except that the content of the polytetrafluoroethylene-based copolymer ionomer binder was lowered as shown in Table 1 and the content of the solid electrolyte was increased. An all-solid-state battery was manufactured at the same loading level as Example 1 using the manufactured composite positive electrode.

### Example 5

A composite positive electrode was manufactured in the same manner as in Example 1, except that the content of the polytetrafluoroethylene-based copolymer ionomer binder was increased as shown in Table 1 and the content of the solid electrolyte was lowered. An all-solid-state battery was manufactured at the same loading level as Example 1 using the manufactured composite positive electrode.

### Example 6

A composite positive electrode was manufactured in the same manner as in Example 1, except that the content of the polytetrafluoroethylene-based copolymer ionomer binder was increased as shown in Table 1 and the content of the solid electrolyte was lowered. An all-solid-state battery was manufactured at the same loading level as Example 1 using the manufactured composite positive electrode.

### Comparative Example 1

A positive electrode active material, LiNi_{0.7}Co_{0.15}Mn_{0.15}O₂ (hereinafter NCM) with a nickel content of 70%, a cobalt content of 15%, and a manganese content of 15%, and Li₆PS₅Cl, which is a sulfide-based solid electrolyte, were added to xylene solvent (Sigma Aldrich company) and then mixed at room temperature. Next, a conductive material (Super-P) and a nitrile-butadiene rubber binder (poly (acrylonitrile-co-butadiene), Sigma Aldrich company, see (b) of FIG. 2), which is a binder, were added to a mixture of xylene solvent, a positive electrode active material and a solid electrolyte, followed by dry mixing at room temperature for 10 minutes to prepare a composite positive electrode. The positive electrode active material, the sulfide-based solid electrolyte, the conductive material and the binder were mixed in a weight ratio as shown in Table 1 below. Lithium metal (Honjo company), a solid electrolyte layer of Li₆PS₅Cl (100mg), and the prepared composite positive electrode as a negative electrode were sequentially stacked, as shown in FIG. 3. Then, by drying in an oven at a temperature of 100 °C for 12 hours to remove the solvent contained in the composite positive electrode, an all-solid-state battery was prepared. Here, the loading level of the composite positive electrode is shown in Table 1 below. For methods and products not separately described in Comparative Example 1, it was prepared in the same manner as in Example 1.

### Comparative Example 2

A composite positive electrode was manufactured in the same manner as in Example 1, except that a polytetrafluoroethylene binder (Sigma Aldrich company, see (c) of FIG. 2) was used as the binder. An all-solid-state battery was manufactured at the same loading level as Example 1 using the manufactured composite positive electrode.

**Table 1:**

| Item | Active material (% by weight) | Solid electrolyte (% by weight) | Electrically conductive material (% by weight) | Binder (% by weight) | Loading level of positive electrode (mg/cm²) |
|---|---|---|---|---|---|
| Comparative Example 1 | 70 | 25 | 3 | 2 | 22.4 |
| Comparative Example 2 | 70 | 25 | 3 | 2 | 22.4 |
| Example 1 | 70 | 25 | 3 | 2 | 22.4 |
| Example 2 | 70 | 25 | 3 | 2 | 11.2 |
| Example 3 | 70 | 25 | 3 | 2 | 30.0 |
| Example 4 | 70 | 26.9 | 3 | 0.1 | 22.4 |
| Example 5 | 70 | 22 | 3 | 5 | 22.4 |
| Example 6 | 70 | 17 | 3 | 10 | 22.4 |

### 2. Evaluation of electrochemical performance

### Evaluation of ion conductivity

After preparing a mixture of the solid electrolytes and the binders according to Comparative Examples 1 and 2 and Example 1, 100 mg of the mixture was pressurized at 300 MPa to prepare pellets. SUS electrodes were placed on both sides of the prepared pellet and the ion conductivity was measured by an impedance analyzer (ZIVE MP1, Wona Tech company) at room temperature. Table 2 is a table comparing the types and compositions of the solid electrolytes and the binders according to the composite positive electrodes of Comparative Examples 1 and 2 and Example 1 of the present invention with their respective ion conductivity. In Comparative Example 1, Comparative Example 2 and Example 1, only the type of binder is different, and the content of the binder and the solid electrolyte constituting the composite positive electrode is the same in a weight ratio of solid electrolyte:binder = 25:2. If the binder is not comprised, the ion conductivity of the Li₆PS₅Cl solid electrolyte itself is 1.67 mS cm⁻¹. If the polymer binder is comprised as in Comparative Examples 1 and 2 and Example 1, it can be seen that the ion conductivity is lower than 1.67 mS cm⁻¹.

When the nitrile-butadiene rubber binder applied to Comparative Example 1 was comprised, it was found to be 0.71 mS cm⁻¹, when the polytetrafluoroethylene binder applied to Comparative Example 2 was comprised, it was found to be 1.31 mS cm⁻¹, and when the polytetrafluoroethylene-based copolymer ionomer binder applied to Example 1 was comprised, it was found to be 1.45 mS cm⁻¹. That is, if the polytetrafluoroethylene-based copolymer ionomer binder containing lithium ions is used as in Example 1, it can be confirmed that the ion conductivity is higher than that of the conventional binder.

**Table 2:**

| Item | Composition (weight ratio) | Ion conductivity (mS cm⁻¹) |
|---|---|---|
| Comparative Example 1 | Li₆PSₛCl : nitrile butadiene rubber (25 : 2) | 0.71 |
| Comparative Example 2 | Li₆PS₅Cl : polytetrafluoroethylene (25 : 2) | 1.31 |
| Example 1 | Li₆PS₅Cl : ionomer (25 : 2) | 1.45 |

### Evaluation of capacity and cycle characteristics

A charging/discharging cycle was performed at 30 °C at 0.5 C (1.153 mA) with 4.3 V charging and 3.0 V (vs Li/Li⁺) discharging, and the voltage and the capacity were measured at each cycle.

FIG. 4 is a graph comparing charge/discharge curves in each cycle according to Comparative Example 1 (a), Comparative Example 2 (b), and Example 1 (c) of the present invention. In Comparative Example 1, Comparative Example 2, and Example 1, the other conditions were the same, but only the type of each binder was different, and each capacity was confirmed in 1 cycle, 10 cycles, 20 cycles, 50 cycles, and 100 cycles.

In the case of Comparative Example 1 to which the nitrile-butadiene rubber binder was applied, the initial capacity was shown to be lower than those of Comparative Examples 2 and Example 1, and a phenomenon was shown in which the capacity was decreased and the overvoltage was increased as the cycles were progressed. In the case of Comparative Example 2 to which the polytetrafluoroethylene binder was applied, the damage to the solid electrolyte was reduced by applying a solvent-free process, as compared to Comparative Example 1, and thus the initial capacity was increased, but a decrease in capacity and an increase in overvoltage were observed in the course of the cycles. In the case of Example 1 to which a polytetrafluoroethylene-based copolymer ionomer binder is applied, it showed a high initial capacity compared to Comparative Example 1 and Comparative Example 2, and it can be seen that even in the course of the cycles, there was little increase in overvoltage and little decrease in capacity, and they were maintained. In the case of Example 1 and Comparative Example 1, it can be confirmed that by manufacturing the composite positive electrode by a solvent-free process, no damage to the solid electrolyte or the crystal of the electrolyte membrane by the solvent occurs, thereby indicating a high initial capacity. In the case of Example 1 which is the case of applying a polytetrafluoroethylene-based copolymer ionomer binder to the composite positive electrode, it can be seen that the cycle characteristics are excellent compared to Comparative Example 1 and Comparative Example 2. Example 1 is considered to be because the movement of lithium ions is efficiently performed, as the bonding force between the positive electrode active materials is excellently maintained even with the reversible contraction and expansion of the positive electrode that occurs during charging and discharging.

FIG. 5 is a graph showing cycle characteristics and efficiency according to Comparative Example 1 (a), Comparative Example 2 (b), and Example 1 (c) of the present invention. A charging/discharging cycle was performed at 30 °C at 0.5 C (1.153 mA) with 4.3 V charging and 3.0 V (vs Li/Li⁺) discharging.

Comparing Comparative Example 1 and Comparative Example 2, it can be seen that Comparative Example 1 exhibits superior discharging capacity and cycle characteristics compared to Comparative Example 2. In the case of Comparative Example 2, a composite positive electrode was manufactured by a solvent-free process, but in the case of Comparative Example 1, a composite positive electrode was manufactured by a wet process using a solvent, thereby confirming that the discharging capacity and cycle characteristics were affected. Specifically, since the solvent contained in the composite positive electrode can react with the solid electrolyte during the manufacturing process, a xylene solvent with sufficiently small polarity was used in Comparative Example 2, and a material with low polarity was also applied for the polymer binder. Accordingly, Comparative Example 2 to which the positive electrode of high loading was applied showed low discharge capacity and cycle characteristics.

Comparing Comparative Example 2 and Example 1, it can be seen that in both cases a composite positive electrode was prepared without using a solvent, and Example 1 exhibits superior cycle characteristics compared to Comparative Example 2. This is considered to be because the polytetrafluoroethylene-based copolymer ionomer binder of Example 1 effectively binds the positive electrode active material, the conductive material, and the solid electrolyte, which is maintained even during the course of the cycles, and the mobility of lithium ions is improved by the lithium ions contained in the polytetrafluoroethylene-based copolymer ionomer binder.

That is, it can be confirmed that if the composite positive electrode is manufactured using a binder capable of a solvent-free dry process, the discharging capacity and cycle characteristics are improved, and in particular, if the polytetrafluoroethylene-based copolymer ionomer binder is used as in Example 1, excellent cycle characteristics are maintained.

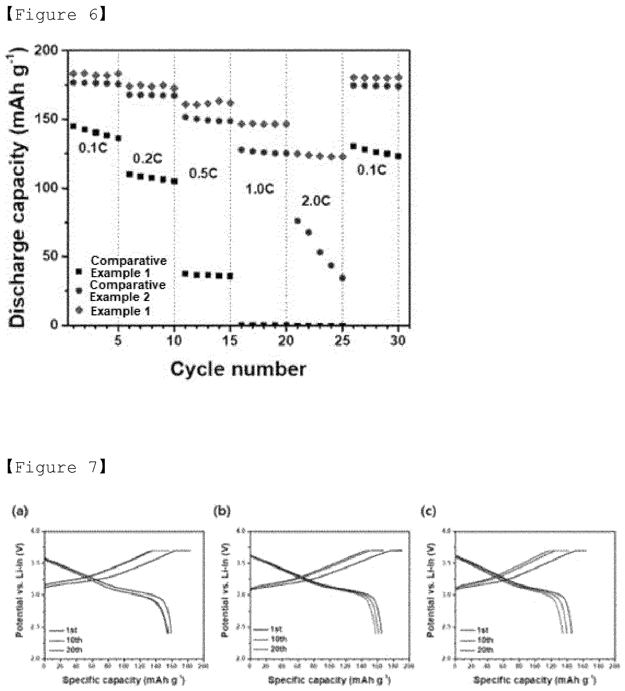

FIG. 6 is a graph showing c-rate characteristics of Comparative Example 1, Comparative Example 2 and Example 1 according to the present invention. The charging and discharging were performed 5 times at 0.1 C, 0.2 C, 0.5 C, 1.0 C and 2.0 C, respectively, and then the charging and discharging were performed again 5 times at 0.1 C.

In the case of Comparative Example 1, it can be seen that the capacity is reduced as the charging/discharging current density is increased, and it can be seen that the capacity expression is hardly achieved at a high rate of 1.0 C or higher. In the case of Comparative Example 2, it can be seen that even at 1.0 C, it shows an excellent capacity compared to Comparative Example 1, but it can be seen that the discharge capacity is greatly reduced at a high rate of 2.0 C. It can be seen that Example 1 exhibits superior c-rate characteristics compared to Comparative Example 1 and Comparative Example 2, and even at a high rate of 2.0 C, there was almost no decrease in capacity and excellent characteristics were exhibited. That is, in the case of Example 1, it can be seen that it can be applied even to high-rate/fast charging/discharging in an all-solid-state battery, and the output characteristics are improved.

FIG. 7 is a result showing the cycle characteristics of Example 1 (a), Example 2 (b), and Example 3 (c) of the present invention. In Examples 1, 2 and 3, the polytetrafluoroethylene-based copolymer ionomer binder was applied in the same amount of 2 % by weight, but only the loading level of the positive electrode is different to be 22.4 mg/cm² (Example 1), 11.2 mg/cm² (Example 2) and 30.0 mg/cm² (Example 3). When comparing Example 1(a), Example 2(b) and Example 3(c), it can be seen that the discharge capacity and cycle characteristics are excellently maintained even when the loading level is increased.

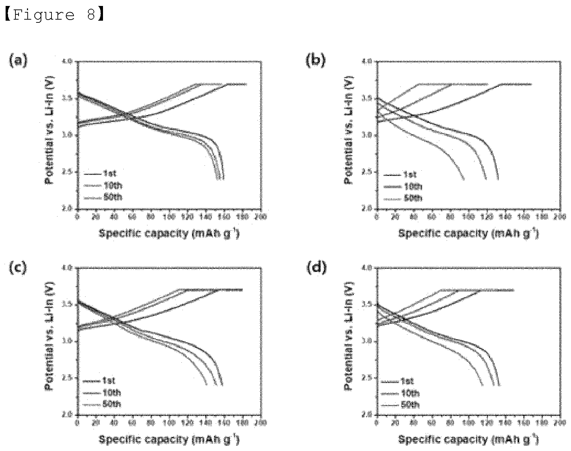

FIG. 8 is a result showing the cycle characteristics of Example 1 (a), Example 4 (b), Example 5 (c) and Example 6 (d). In the case of Examples 1, 4, 5 and 6, the loading level of the composite positive electrode was the same as 22.4 mg/cm², but the same polytetrafluoroethylene-based copolymer ionomer binder was added with different contents. Example 4(b) is a case where the polytetrafluoroethylene-based copolymer ionomer binder is 0.1 % by weight. It can be seen that the content of the binder is lower than that of Example 1 (2 % by weight), and thus the overvoltage is increased and the capacity is decreased while the cycles are performed. It was confirmed that in the case of Example 5(c) and Example 6(d), the polytetrafluoroethylene-based copolymer ionomer binder is 5 % by weight and 10 % by weight, respectively, and has better cycle characteristics than Example 4, but the cycle characteristics are relatively deteriorated compared to Example 1. That is, it can be confirmed that in the composite positive electrode system like Example 1, it is best when the binder content is 2 % by weight.

It will be understood by those of ordinary skill in the art to which the present invention pertains that the present invention may be embodied in other specific forms without changing the technical spirit or essential features thereof. Therefore, it should be understood that the examples described above are illustrative in all respects and not restrictive. The scope of the present invention is indicated by the following claims rather than the above detailed description, and it should be construed that all modifications or variations, which are derived from the meaning and scope of the claims and the concept of equivalents thereof, are included within the scope of the present invention.

## Claims

1. A positive electrode for an all-solid-state battery, comprising:
a positive electrode active material;
a perfluorinated ionomer comprising lithium substituted sulfonate;
a solid electrolyte; and
conductive carbon.

2. The positive electrode for the all-solid-state battery according to claim 1, wherein the perfluorinated ionomer is represented by the following Formula 1: 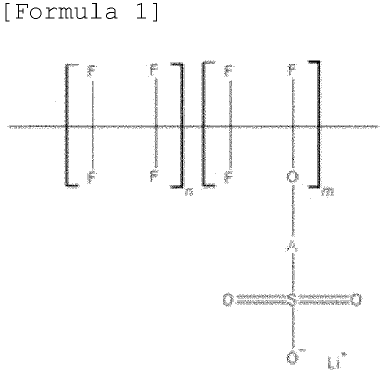
wherein A is each independently a substituted or unsubstituted C1 to C30 alkylene group, a substituted or unsubstituted C1 to C30 haloalkylene group or a substituted or unsubstituted C1 to C30 hydroxyalkylene group, and
n and m are each an integer from 1 to 100.

3. The positive electrode for the all-solid-state battery according to claim 2,
wherein A is -(CF₂-CF₂)ₚ-, and
p is an integer of 1 to 15.

4. The positive electrode for the all-solid-state battery according to claim 1,
wherein the electrode is manufactured by mixing the positive electrode active material; the perfluorinated ionomer comprising lithium substituted sulfonate; the solid electrolyte; and the conductive carbon, but is manufactured by mixing without using a solvent.

5. The positive electrode for the all-solid-state battery according to claim 1,
wherein the positive electrode active material comprises at least one of LiCoO₂, Li(NiₓCo_{y}Mn_{z})O₂ [x + y + z = 1], Li(NiₓCo_{y}Al_{z})O₂ [x + y + z = 1], and LiFePO₄.

6. The positive electrode for the all-solid-state battery according to claim 1,
wherein the solid electrolyte comprises a halide-based solid electrolyte or a sulfide-based solid electrolyte.

7. The positive electrode for the all-solid-state battery according to claim 6,
wherein the sulfide-based solid electrolyte comprises at least one of Li₆PS₅Cl, Li₁₀GeP₂S₁₂, Li₃PS₄, and Li₇P₃S₁₁, and the halide-based solid electrolyte comprises at least one of Li₃YCl₆, Li₃InCl₆, and Li₂ZrCl₆.

8. The positive electrode for the all-solid-state battery according to claim 1,
wherein the conductive carbon comprises at least one of vapor grown carbon fiber (VGCF), carbon nanotube (CNT), Super P, Super C, carbon black, Ketjen black, acetylene black, coke, glassy carbon, and activated carbon.

9. The positive electrode for the all-solid-state battery according to claim 1,
wherein the positive electrode active material is contained in an amount of 60% by weight to 90% by weight, the solid electrolyte is contained in an amount of 5% by weight to 35% by weight, the conductive carbon is contained in an amount of 0.1% by weight to 10% by weight, and the perfluorinated ionomer is contained in an amount of 0.1% by weight to 10% by weight.

10. The positive electrode for the all-solid-state battery according to claim 9,
wherein the perfluorinated ionomer is a copolymer comprising polytetrafluoroethylene, and the perfluorinated ionomer is contained in an amount of 0.1% by weight to 5% by weight.

11. An all-solid-state battery, comprising:
the positive electrode for the all-solid-state battery according to any one of claims 1 to 10;
a negative electrode; and
a solid electrolyte layer interposed between the positive electrode and the negative electrode.

12. The all-solid-state battery according to claim 11,
wherein the solid electrolyte layer is made of the same material as the solid electrolyte contained in the positive electrode for the all-solid-state battery.

13. The all-solid-state battery according to claim 11,
wherein the solid electrolyte and the solid electrolyte layer comprise at least one of Li₆PS₅Cl, Li₁₀GeP₂S₁₂, Li₃PS₄, and Li₇P₃S₁₁.

14. The all-solid-state battery according to claim 11,
wherein the negative electrode comprises at least one of lithium metal and indium-lithium alloy.
